# DEMANDE DE BREVET EUROPEEN

(11) **EP 4 541 468 A1**
(43) Date de publication de la demande: **23.04.2025**
(21) Numéro de dépôt: 23306826.1
(22) Date de dépôt: 18.10.2023
(51) Int. Cl.: B09B 3/60, B09C 1/10, C02F 3/02, C02F 3/34, C02F 11/02, C08J 11/10, C02F 103/08, B09B 101/90, B09B 101/75

(54) **PROCÉDÉ DE DÉPOLLUTION PAR DÉGRADATION BACTÉRIENNE DE PARTICULES DE PLASTIQUE**

(71) Demandeur: Eiffage GC Infra Linéaires, 78140 Vélizy-Villacoublay (FR)
(72) Inventeur: BOULANGE, Laurence, 38530 Chapareillan (FR); DOOM, Florian, 77144 Montévrain (FR); BENJEMAA, Myriam, 93440 Dugny (FR); HERVE, Florent, 77230 Dammartin en Goële (FR)
(74) Mandataire: Plasseraud IP

(57) **Abrégé**

La présente divulgation porte sur un procédé efficace de dépollution par dégradation bactérienne de particules de plastique grâce à un mélange de bactéries à Gram positif et de bactéries à Gram négatif

## Description

### Domaine technique

La présente divulgation relève du domaine de la dégradation du plastique et de la dépollution des sols, en particulier de la dépollution des sols comprenant des particules de plastique.

### Technique antérieure

La production mondiale de plastique n'a cessé de croître au cours des dernières décennies en raison de leur utilisation intensive dans notre vie quotidienne, par exemple en tant qu'emballage, et dans les industries, par exemple dans la construction ou l'électronique.

Les plastiques sont dérivés du pétrole et peuvent être divisés en deux groupes principaux en fonction de leurs structures de base. Le premier groupe est constitué des polymères à squelette hétéroatomique, tels que le polyuréthane (PU) et le polyéthylène téréphtalate (PET). Le second groupe, qui représente plus de 75% de la production annuelle de plastique, est constitué des polymères avec un squelette carbone-carbone (C-C), comme le polyéthylène (PE), le polystyrène (PS), le polypropylène (PP) et le polychlorure de vinyle (PVC).

La dégradation des plastiques est extrêmement lente. Par exemple, la demi-vie estimée des bouteilles en polyéthylène haute densité (PEHD) dans un environnement marin a été évaluée à 58 ans, elle est de 1200 ans pour des tuyaux en PEHD.

La dégradation des plastiques peut produire des microparticules de plastique. Ces microparticules de plastique polluent durablement les sols car leur durée de vie est du même ordre de grandeur que celle du plastique qui les constitue. Ces microparticules peuvent également contaminer les poissons destinés à la consommation humaine lorsqu'elles se retrouvent dans la mer.

Ces microparticules de plastique induisent une pollution grave qui nuit à l'environnement, à la santé humaine car ils se retrouvent dans notre alimentation et modifie de manière irréversible le cycle écologique.

Il existe donc un besoin d'un procédé permettant de dégrader les microparticules de plastique pour dépolluer un milieu comprenant de telles microparticules et éviter la propagation de ces microparticules dans l'environnement.

Il est du mérite des inventeurs d'avoir trouvé un procédé qui répond à ce besoin.

### Résumé

Il est proposé un procédé de dépollution comprenant une étape de :
a) mise en contact de particules de plastique avec un mélange bactérien apte à dégrader les particules de plastique,
   ledit mélange bactérien comprenant des bactéries à Gram positif et des bactéries à Gram négatif.

De façon étonnante, le procédé de la présente invention permet de dégrader efficacement et rapidement les particules de plastique comprises dans un sol grâce au mélange bactérien. En effet, la masse de microparticules de plastique comprises dans un sol peut être diminuée de 83% en 21 jours grâce au mélange bactérien. Par contre, la masse de microparticules de plastique comprises dans un sol ne diminue que de 4% à 5% en 21 jours avec des bactéries à Gram positif et ne diminue que de 3 à 5% en 21 jours avec des bactéries à Gram négatif.

Selon les inventeurs, ces résultats s'expliquent par une collaboration entre les bactéries à Gram positif et les bactéries à Gram négatif. En effet, les inventeurs ont constaté que :
- les bactéries à Gram positif initient la formation d'un biofilm autour des particules de plastique grâce à la production de polymères extracellulaires qui permettent l'adhésion, puis la colonisation de la surface des particules de plastique par les bactéries à Gram négatif, puis
- les bactéries à Gram négatif produisent les enzymes qui dégradent le plastique des particules.

Grâce à cette dégradation rapide des particules de plastique, le procédé de dépollution de la présente invention permet de dépolluer rapidement et efficacement un milieu comprenant des particules de plastique.

### Description des modes de réalisation

Il est proposé un procédé de dépollution comprenant une étape de :
a) mise en contact de particules de plastique avec un mélange bactérien apte à dégrader les particules de plastique,
   ledit mélange bactérien comprenant des bactéries à Gram positif et des bactéries à Gram négatif.

Les particules de plastique mises en oeuvre dans le procédé de depollution de la présente invention peuvent être des macroparticules de plastique, des microparticules de plastique ou leurs mélanges, plus particulièrement des microparticules de plastique.

Au sens de la présente invention, le terme "macroparticules" désigne des particules dont la taille est comprise de 5 mm à 40 mm.

Au sens de la présente invention, le terme "microparticules" désigne des particules dont la taille est inférieure à 5 mm. Les microparticules de plastique peuvent être obtenus par dégradation thermique, par exposition aux UV, ou leurs combinaisons d'un élément en plastiques, par exemple un déchet.

La taille des particules peut, par exemple, être déterminée par tri optique, par tamisage, ou par microscopie. En fonction de la taille des particules, l'homme du métier saura choisir la méthode adaptée pour déterminer la taille des particules.

Typiquement les particules de plastique peuvent être des particules de polyéthylène (PE), des particules de polystyrène (PS), des particules de polyuréthane (PU), des particules de polyéthylène téréphtalate (PET), des particules de polypropylène (PP), des particules de polychlorure de vinyle (PVC) ou leurs mélanges, en particulier des particules de polyéthylène (PE), des particules de polyéthylène téréphtalate (PET), des particules de polypropylène (PP), des particules de polychlorure de vinyle (PVC) ou leurs mélanges, plus particulièrement des particules de polyéthylène (PE), des particules de polystyrène (PS) ou leurs mélanges.

Les bactéries à Gram positif peuvent être des bactéries du genre *Bacillus,* du genre *Lysinibacillus,* du genre *Staphylococcus,* du genre *Brevibacillus,* du genre *Microbacterium,* du genre *Streptomyces,* du genre *Arthrobacter,* du genre *Kocuria,* du genre *Rhodococcus,* du genre *Nocardia,* du genre *Paenibacillus* ou leurs mélanges, en particulier des bactéries du genre *Bacillus,* du genre *Brevibacillus,* du genre *Rhodococcus* ou leurs mélanges, plus particulièrement parmi des bactéries du genre *Bacillus.*

Les bactéries du genre Bacillus peuvent être *Bacillus amyloliquefaciens, Bacillus cereus, Bacillus halodenitrifcans, Bacillus licheniformis, Bacillus megaterium, Bacillus pacificus, Bacillus pumilus, Bacillus serratia, Bacillus sphericus, Bacillus subtilis* ou leurs mélanges, en particulier *Bacillus subtilis, Bacillus cereus, Bacillus paralicheniformis* ou leurs mélanges, plus particulièrement peuvent être *Bacillus subtilis.*

Les bactéries du genre *Lysinibacillus* peuvent être *Lysinibacillus fusiformis, Lysinibacillus xylanilyticus* ou leurs mélanges.

Les bactéries du genre *Staphylococcus* peuvent être *Staphylococcus arlettae, Staphylococcus epidermidis* ou leurs mélanges.

*Brevibaccillus borstelensis* est une bactérie du genre *Brevibacillus* adaptée au procédé de dépollution de la présente invention.

*Microbacterium paraoxydans* est une bactérie du genre *Microbacterium* adaptée au procédé de dépollution de la présente invention.

Les bactéries du genre *Streptomyces* peuvent être *Streptomyces badius, Streptomyces setonii, Streptomyces viridosporus ou* leurs mélanges.

*Arthrobacter paraffineus* est une bactérie du genre *Arthrobacter* adaptée au procédé de dépollution de la présente invention.

*Kocuria palustris* est une bactérie du genre *Kocuria* adaptée au procédé de dépollution de la présente invention.

Les bactéries du genre *Rhodococcus* peuvent être *Rhodococcus rhorocuros, Rhodococcus ruber C208* ou leurs mélanges.

*Nocardia asteroides* est une bactérie du genre *Nocardia* adaptée au procédé de dépollution de la présente invention.

*Paenibacillus urinalis* est une bactérie du genre *Paenibacillus* adaptée au procédé de dépollution de la présente invention.

Les bactéries à Gram négatif peuvent être les bactéries du genre *Pseudomonas,* du genre *Acinetobacter,* du genre *Stentrophomonas,* du genre *Enterobacter,* du genre *Klebsiella,* du genre *Microbulbifer,* du genre *Chryseobacterium,* du genre *Mucispirillum,* du genre *Citrobacter,* du genre *Escherichia,* du genre *Serratia* ou leurs mélanges, en particulier du genre *Pseudomonas,* du genre *Enterobacter,* du genre *Klebsiella* ou leurs mélanges, plus particulièrement peuvent être du genre *Pseudomonas.*

Les bactéries du genre *Pseudomonas* peuvent être *Pseudomonas aeroginosa, Pseudomonas citronellolis, Pseudomonas fluorescens, Pseudomonas mucidolens, Pseudomonas putida, Pseudomonas siringae* ou leurs mélanges, en particulier *Pseudomonas fluorescens, Pseudomonas putida, Pseudomonas citronellolis* ou leurs mélanges.

*Acinetobacter bumannii* est une bactérie du genre *Acinetobacter* adaptée au procédé de dépollution de la présente invention.

*Stentrophomonas pavanii* est une bactérie du genre *Stentrophomonas* adaptée au procédé de dépollution de la présente invention.

*Enterobacter asburiae* est une bactérie du genre *Enterobacter* adaptée au procédé de dépollution de la présente invention.

Les bactéries du genre *Klebsiella* peuvent être *Klebsiella pneumonia, Klebsiella aerogenes* et leurs mélanges.

*Microbulbifer hydrolyticus* est une bactérie du genre *Microbulbifer* adaptée au procédé de dépollution de la présente invention.

*Chryseobacterium gleum* est une bactérie du genre *Chryseobacterium* adaptée au procédé de dépollution de la présente invention.

*Mucispirillum ralstonia* est une bactérie du genre *Mucispirillum* adaptée au procédé de dépollution de la présente invention.

*Citrobacter freundii* est une bactérie du genre *Citrobacter* adaptée au procédé de dépollution de la présente invention.

*Escherichia coli* est une bactérie du genre *Escherichia* adaptée au procédé de dépollution de la présente invention.

*Serratia marcescens* est une bactérie du genre *Serratia* adaptée au procédé de dépollution de la présente invention.

Selon un mode de réalisation :
- les bactéries à Gram positif peuvent être des bactéries du genre *Bacillus,* en particulier être *Bacillus subtilis,* et
- les bactéries à Gram négatif peuvent être des bactéries du genre *Pseudomona,* en particulier être *Pseudomonas fluorescens, Pseudomonas putida, Pseudomonas citronellolis* ou leurs mélanges.

De façon avantageuse, des résultats particulièrement probants ont été obtenus avec un mélange bactérien dont :
- les bactéries à Gram positif sont *Bacillus subtilis,* et
- les bactéries à Gram négatif sont *Pseudomonas fluorescens, Pseudomonas putida ou Pseudomonas citronellolis.*

De plus, ces quatre bactéries sont non pathogènes pour l'homme. Ainsi, la mise en oeuvre du procédé de dépollution de la présente invention avec ces quatre bactéries représente avantageusement un faible danger pour l'opérateur du procédé.

Au début de l'étape a), le rapport massique entre les particules de plastique et un milieu de culture comprenant le mélange bactérien peut être de 1:1 à 1 :100, en particulier de 1:25 à 1:80, tout particulièrement de 1:50 à 1:70.

Au début de l'étape a), la concentration du mélange bactérien dans le milieu de culture peut être de 1 UFC/ml à 100UFC/ml, en particulier de 10 UFC/ml à 50 UFC/ml, plus particulièrement de 20 UFC/ml à 50 UFC/ml.

De façon avantageuse, un rapport et/ou une concentration dans ces gammes permet d'avoir un bon compromis entre une dégradation rapide et efficace des particules de plastique et un cout réduit de mise en oeuvre du procédé de dépollution de la présente invention.

Le rapport entre le nombre de bactéries à Gram positif et le nombre de bactéries à Gram négatif dans le mélange bactérien peut être de 80:20 à 30:70, en particulier de 70:30 à 40:60, tout particulièrement de 60:40 à 50:50.

De façon avantageuse, un rapport dans ces gammes permet d'avoir une dégradation rapide et efficace des particules de plastique par le procédé de dépollution de la présente invention. En effet, les inventeurs sont d'avis que si le rapport n'est pas dans ces gammes alors :
- les bactéries à Gram négatif ne sont pas bien protégées par le biofilm formé par les bactéries à Gram positif et donc elles peuvent mourir rapidement, et/ou
- le nombre de bactéries à Gram négatif n'est pas suffisante pour que la dégradation du plastique soit rapide et efficace.

L'étape a) peut être mise en oeuvre à une température comprise entre 10°C et 40°C, en particulier entre 15°C et 25°C.

Ces plages de température comprennent la température ambiante. Mettre en oeuvre l'étape a) dans ces gammes de température est donc simple et économique car ne requière pas d'unité dédié au chauffage du procédé de dépollution de la présente invention.

Les particules de plastiques peuvent être comprises dans un matériau.

Différents matériaux sont actuellement pollués par les particules de plastiques et le procédé de dépollution de la présente invention peut avantageusement permettre de les dépolluer.

La concentration massique en particules de plastique dans le matériau peut être de 1 mg/kg à 1 000 000 mg/kg en particulier de 50 mg/kg à 500 000 mg/kg, plus particulièrement de 500 mg/kg à 250 000 mg/kg.

La gamme de concentration massique en particules de plastique dans le matériau est très grande. Ainsi, de façon avantageuse, le procédé est adapté à dépolluer de nombreux matériaux différents.

Les matériaux peuvent être :
- un matériau d'excavation,
- de l'eau, en particulier de l'eau de mer, de l'eau douce, ou de l'eau saumâtre, ou
- leurs mélanges, en particulier une boue.

Au sens de la présente invention, l'expression "matériau d'excavation" désigne un matériau excavé à la surface de la Terre ou dans le sous-sol.

Le matériau d'excavation peut provenir du sol, d'une décharge comprenant un mélange de déchet plastique et de terre, d'une terre agricole, d'une terre végétale, d'une terre remblai ou de leurs mélanges, en particulier d'une décharge comprenant un mélange de déchet plastique et de terre.

Le matériau d'excavation peut comprendre du humus, de la tourbe, de l'argile vasarde, de l'argile molle, de l'argile raide, du sable, du gravier lâche, du gravier compact, de la roche tendre, de la roche dures.

Avant l'étape a), du calcium peut être ajouté au matériau, en particulier au matériau d'excavation ou à une boue, plus particulièrement au matériau d'excavation.

Sans vouloir être lié à une quelconque théorie, les inventeurs sont d'avis que l'ajout de calcium dans le matériau facilite avantageusement l'accès des bactéries du mélange bactérien à la surface des particules de plastique.

L'ajout de calcium est particulièrement adapté au matériau comprenant de l'argile et du humus.

L'étape a) peut être mise en oeuvre dans une biopile.

Au sens de la présente invention, le terme "biopile" désigne une structure comprenant :
- une couche de matériau d'excavation recouverte d'une bâche imperméable,
- un système de drain entrant permettant de mettre en contact les bactéries du mélange bactérien avec le matériau d'excavation, d'apporter des nutriments aux bactéries, et
- un système de drain sortant permettant d'évacuer les gaz générés par la dégradation des particules de plastiques.

La biopile est une structure couramment utilisée pour dépolluer des matériaux solides tel que le sol. L'homme du métier saura adapter la biopile au procédé de dépollution de la présente invention.

### Exemples

Exemple 1 : selon l'invention.

6 kg de matériaux d'excavation provenant d'une décharge et contenant 533 mg/kg de microparticules de plastiques sont mélangés avec 180 g d'un milieu de culture comprenant un mélange bactérien comprenant 40% en nombre de bactéries à Gram négatif et 60% en nombre de bactéries à Gram positif. La concentration initiale du mélange bactérien dans le milieu de culture est d'environ 30 UFC/ml.

Le mélange est homogénéisé par malaxage pour obtenir un mélange homogène. Des échantillons de 100 mg du mélange homogène sont prélevés. Des échantillons sont placés dans une enceinte climatique à 10°C, d'autres dans une enceinte climatique à 20°C et d'autres dans une enceinte climatique à 40°C.

Après 21 jours, 2 échantillons de chaque enceinte climatique sont prélevés et analysés pour déterminer la masse de microparticules dans les 2 échantillons. Les doublons permettent d'assurer le résultat puisque l'analyse est destructive et la valeur moyenne de la concentration massique de microparticules de plastiques de chaque échantillon est indiquée dans les Tableaux 1, 2 et 3. Dans ces Tableaux, la concentration massique est exprimée en mg de microparticules de plastique par kg de matériau d'excavation.

L'analyse est réalisée selon les 2 étapes suivantes :
1/ Séparation des microparticules de plastiques de l'échantillon par flottaison en utilisant du chlorure de zinc, et
2/ Quantification de la masse de microparticules de plastiques par pesée.

Les trois milieux de culture suivants sont testés :
- les bactéries à Gram positif sont *Bacillus subtilis* et les bactéries à Gram négatif sont *Pseudomonas putida,*
- les bactéries à Gram positif sont *Bacillus subtilis* et les bactéries à Gram négatif sont *Pseudomonas citronellolis,* et
- les bactéries à Gram positif sont *Bacillus subtilis* et les bactéries à Gram négatif sont *Pseudomonas fluorescens.*

### Exemple 1 Comparatif.

Le protocole est identique à celui de l'Exemple 1, la différence étant que le milieu de culture comprend soit *Bacillus subtilis* soit *Pseudomonas fluorescens.*

La valeur moyenne de la concentration massique e de microparticules de plastique de chaque échantillon est indiquée dans les Tableaux 1, 2 et 3. Dans ces Tableaux, la concentration massique est exprimée en mg de microparticules de plastique par kg de matériau d'excavation.

Les Tableaux 1, 2 et 3 mettent bien en évidence que la dégradation des microparticules de plastique en présence du milieu de culture comprenant le mélange des bactéries à Gram positif et des bactéries à Gram négatif est efficace et rapide.

Les Tableaux 1, 2 et 3 mettent également bien en évidence que la dégradation des microparticules de plastique par un milieu de culture comprenant des bactéries à Gram positif ou des bactéries à Gram négatif est très faible.

**[Tableau 1] : Température : 10°C**

| Temps (jours) | Mélange bactérien | | | | |
|---|---|---|---|---|---|
| | *Bacillus subtilis* et *Pseudomonas putida* | *Bacillus subtilis* et *Pseudomonas citronellolis* | *Bacillus subtilis* et *Pseudomonas fluorescens* | *Bacillus subtilis* | *Pseudomonas fluorescens* |
| 0 | 533 | 533 | 533 | 533 | 533 |
| 21 | 306 | 313 | 439 | 508 | 518 |

**[Tableau 2] : Température : 20°C**

| Temps (jours) | Mélange bactérien | | | | |
|---|---|---|---|---|---|
| | *Bacillus subtilis* et *Pseudomonas putida* | *Bacillus subtilis* et *Pseudomonas citronellolis* | *Bacillus subtilis* et *Pseudomonas fluorescens* | *Bacillus subtilis* | *Pseudomonas fluorescens* |
| 0 | 533 | 533 | 533 | 533 | 533 |
| 21 | 220 | 151 | 195 | 508 | 506 |

**[Tableau 3] : Température : 40°C**

| Temps (jours) | Mélange bactérien | | | | |
|---|---|---|---|---|---|
| | *Bacillus subtilis* et *Pseudomonas putida* | *Bacillus subtilis* et *Pseudomonas citronellolis* | *Bacillus subtilis* et *Pseudomonas fluorescens* | *Bacillus subtilis* | *Pseudomonas fluorescens* |
| 0 | 533 | 533 | 533 | 533 | 533 |
| 21 | 217 | 92 | 492 | 510 | 516 |

## Revendications

1. Procédé de dépollution comprenant une étape de :
a) mise en contact de particules de plastique avec un mélange bactérien apte à dégrader les particules de plastique, ledit mélange bactérien comprenant des bactéries à Gram positif et des bactéries à Gram négatif.

2. Procédé de dépollution selon la revendication 1, dans lequel les bactéries à Gram positif sont des bactéries du genre *Bacillus,* du genre *Lysinibacillus,* du genre *Staphylococcus,* du genre *Brevibacillus,* du genre *Microbacterium,* du genre *Streptomyces,* du genre *Arthrobacter,* du genre *Kocuria,* du genre *Rhodococcus,* du genre *Nocardia,* du genre *Paenibacillus* ou leurs mélanges.

3. Procédé de dépollution selon la revendication 1 ou la revendication 2, dans lequel les bactéries à Gram négatif sont les bactéries du genre *Pseudomonas,* du genre *Acinetobacter,* du genre *Stentrophomonas,* du genre *Enterobacter,* du genre *Klebsiella,* du genre *Microbulbifer,* du genre *Chryseobacterium,* du genre *Mucispirillum,* du genre *Citrobacter,* du genre *Escherichia,* du genre *Serratia* ou leurs mélanges.

4. Procédé de dépollution selon l'une quelconque des revendications 1 à 3, dans lequel :
- les bactéries à Gram positif sont des bactéries du genre *Bacillus,* et
- les bactéries à Gram négatif sont des bactéries du genre *Pseudomonas.*

5. Procédé de dépollution selon l'une quelconque des revendications 1 à 4, dans lequel les bactéries à Gram positif sont *Bacillus subtilis* et les bactéries à Gram négatif sont *Pseudomonas fluorescens, Pseudomonas putida ou Pseudomonas citronellolis.*

6. Procédé de dépollution selon l'une quelconque des revendications 1 à 5, dans lequel les particules de plastique sont des particules de polyéthylène, des particules de polystyrène, des particules de polyuréthane, des particules de polyéthylène téréphtalate, des particules de polypropylène, des particules de polychlorure de vinyle ou leurs mélanges.

7. Procédé de dépollution selon l'une quelconque des revendications 1 à 6, dans lequel le rapport massique entre les particules de plastique et un milieu de culture comprenant le mélange bactérien peut être de 1:1 à 1:100.

8. Procédé de dépollution selon l'une quelconque des revendications 1 à 7, dans lequel le nombre de bactéries à Gram positif et le nombre de bactéries à Gram négatif dans le mélange bactérien est de 80:20 à 30:70.

9. Procédé de dépollution selon l'une quelconque des revendications 1 à 8, dans lequel l'étape a) est mise en oeuvre à une température comprise entre 10°C et 40°C.

10. Procédé de dépollution selon l'une quelconque des revendications 1 à 9, dans lequel les particules de plastique sont comprises dans un matériau.

11. Procédé de dépollution selon la revendication 10, dans lequel la concentration massique en particules de plastique dans le matériau est de 1 mg/kg à 1 000 000 mg/kg.

12. Procédé de dépollution selon la revendication 10 ou la revendication 11, dans lequel le matériau est un matériau d'excavation, de l'eau ou leurs mélanges.

13. Procédé de dépollution selon la revendication 12, dans lequel le matériau d'excavation comprend de la tourbe, de l'argile vasarde, de l'argile molle, de l'argile raide, du sable, du gravier lâche, du gravier compact, de la roche tendre, de la roche dure.

14. Procédé de dépollution selon l'une quelconque des revendications 10 à 13, dans lequel du calcium est ajouté au matériau avant l'étape a).

15. Procédé de dépollution selon l'une quelconque des revendications 1 à 14, dans lequel l'étape a) est mise en oeuvre dans une biopile.
